# EUROPÄISCHE PATENTSCHRIFT

(11) **EP 3 697 652 B1**
(45) Veröffentlichungstag und Bekanntmachung des Hinweises auf die Patenterteilung: **09.11.2022**
(21) Anmeldenummer: 18769958.2
(22) Anmeldetag: 06.09.2018
(51) Int. Cl.: B60T 8/32, B60T 15/14

(54) **BREMSVENTIL, DRUCKLUFT-BREMSSYSTEM MIT DEM BREMSVENTIL UND VERFAHREN ZUR HERSTELLUNG DES BREMSVENTILS**
BRAKE VALVE, COMPRESSED-AIR BRAKE SYSTEM HAVING THE BRAKE VALVE, AND METHOD FOR PRODUCING THE BRAKE VALVE
SOUPAPE DE FREIN, SYSTÈME DE FREINAGE À AIR COMPRIMÉ AVEC SOUPAPE DE FREIN ET PROCÉDÉ DE FABRICATION DE LA SOUPAPE DE FREIN

(30) Priorität: 17.10.2017 DE 102017009654
(43) Veröffentlichungstag der Anmeldung: 26.08.2020
(73) Patentinhaber: ZF CV Systems Europe BV, 1170 Brussels (BE)
(72) Erfinder: WALLBAUM, Torsten, 31089 Duingen (DE); BERROTH, Malte, 30451 Hannover (DE); GAULKE, Arnd, 30974 Wennigsen (DE)
(74) Vertreter: Rabe, Dirk-Heinrich
(86) Internationale Anmeldenummer: PCT/EP2018/073995
(87) Internationale Veröffentlichungsnummer: WO 2019/076534

(56) Entgegenhaltungen:
- WO-A1-2009/152981
- DE-B3-102012 003 106

## Beschreibung

Die Erfindung betrifft ein Bremsventil, ein Druckluft-Bremssystem mit dem Bremsventil und ein Verfahren zur Herstellung oder zur Kalibrierung des Bremsventils.

Bei Druckluft-Bremssystemen für Nutzfahrzeuge sind unterschiedliche Systeme bekannt, um eine vom Fahrer über sein Bremspedal eingegebene Bremsanforderung zu den Radbremsen weiter zu leiten. Bei analogen Druckluft-Bremssystemen wird durch das Bremspedal über ein Betätigungselement, zum Beispiel eine durch das Bremspedal verstellte Betätigungsstange, ein Bremsventil betätigt, das an einen Vorratsdruck bzw. Systemdruck angeschlossen ist und in Abhängigkeit der Betätigung einen analogen Bremsventil-Ausgangsdruck über eine Bremsdruck-Steuerleitung zu einem Bremskreis des Druckluft Bremssystems weiterleitet. Somit wird durch die Bremspedal-Betätigung direkt ein analoger Bremsventil-Ausgangsdruck erzeugt, der dann nachfolgend zum Beispiel über Relaisventile zur Mengenverstärkung und eine ABS-Ventileinrichtung eines Antiblockiersystems zu den Radbremsen weitergegeben wird. Derartige Systeme zeichnen sich durch eine hohe Zuverlässigkeit aus. Der von dem Bremsventil ausgesteuerte Bremsventil-Ausgangsdruck kann ergänzend durch einen Drucksensor gemessen werden, damit zum Beispiel der an der ABS-Ventileinrichtung anliegende Bremsdruck (Vorsteuer-Druck) bekannt ist und die Taktung der ABS-Sperrventile in Kenntnis des anliegenden Bremsdrucks erfolgen kann.

Weiterhin sind Fahrerassistenz-Systeme wie zum Beispiel ein ACC (automatic cruise control) zur Abstandsregelung zu einem oder mehreren Vorderfahrzeugen, sowie Systeme zur Vermeidung oder Verringerung der Schwere von Auffahrunfällen durch selbsttätigen Bremseingriff (AEBS) bekannt, die als externe Systeme ein sogenanntes externes Bremsanfrage-Signal oder XBR-Signal an eine Brems-Steuereinrichtung des Druckluft-Bremssystems ausgeben; aber auch die Brems-Steuereinrichtung selbst kann Bremssystem-interne Steuersignale zur Aktivierung der Radbremsen ausgeben, insbesondere für elektronische Stabilitätsprogramme zur Vermeidung von Fahrzeuginstabilitäten (ESP, ESC) durch selbsttätige, selektive Bremseingriffe (RSC-Bremsungen). Durch ein externes XBR-Signal oder ein Bremssystem-internes Bremssignal wird eine Bremsung an geeigneten Radbremsen angefordert, ohne dass der Fahrer das Bremspedal betätigt. Für eine derartige externe Bremsung (XBR-Bremsung) bzw. interne (RSC-) Bremsung wird ein Systemdruck oder Vorratsdruck über eine Zuschalt-Ventileinrichtung auf eine Bremsleitung zugeschaltet und zum Beispiel durch die ABS-Ventileinrichtung getaktet oder gepulst an die Radbremsen durchgesteuert, um eine angemessene Bremswirkung auszubilden.

Auch für derartige Fahrerassistenz-Systeme oder deren Bremssystemseitige Unterstützung ist eine Kenntnis des bei den Fahrer-Bremsungen anliegenden Bremsdrucks bzw. Bremsventil-Ausgangsdruckes hilfreich, damit eine ausreichende Regelgenauigkeit unter anderem auch beim Anbremsen erreicht werden kann sowie bei Umschaltvorgängen abrupte Übergänge von dem bisher anliegenden Bremsventil-Ausgangsdruck vermieden werden können.

Neben analogen Druckluft-Bremssystemen sind weiterhin elektronische Druckluft-Bremssysteme bekannt, bei denen die Pedalbetätigung des Bremspedals durch einen Bremswertgeber bzw. Sensor elektrisch sensiert wird, ohne hierdurch - wie bei einem Bremsventil - einen analogen Bremsdruck-Steuerwert über einen angeschlossenen pneumatischen Kanal zu den Radbremsen weiter zu leiten. Bei derartigen nicht-analogen, elektronischen Bremssystemen wird somit eine Bremswirkung an den Radbremsen direkt aus einem Systemdruck erzeugt, wobei ein Sensornutzsignal des Bremswertgebers als Soll-Verzögerung bzw. Bremskraft-Anforderung des Fahrers zur Aussteuerung eines Bremsdrucks an den Radbremsen herangezogen wird. Bei derartigen elektronischen Bremssystemen ist die Zuschaltung von externen Bremsanforderungs-Signalen (XBR-Signalen) relativ einfach, da sie in entsprechender Weise wie eine Fahrer-Bremsanforderung herangezogen werden können, um den Bremsdruck an den Radbremsen auszusteuern. Bei elektronischen Bremssystemen ist jedoch zum Teil aus Sicherheitsgründen die Ausbildung einer pneumatischen Rückfallebene erforderlich.

Die DE 10 2012 003 106 B3 beschreibt ein Verfahren zur Bestimmung eines Bremsdruckwertes anhand von Kennlinien, bei dem einem elektrischen Kanal des Bremsventils bzw. Bremswertgebers ein elektrischer Sensor zugeordnet ist, durch den abhängig von Betätigungen des Bremswertgebers elektrische Signale erzeugt werden, die die erfolgte Betätigung repräsentieren. Hierbei wird zunächst eine erste Kennlinie ermittelt und gespeichert, in der die Abhängigkeit der von dem elektrischen Sensor ausgesteuerten elektrischen Signale vom Grad der Betätigung des Bremswertgebers dargestellt ist, und weiterhin eine zweite Kennlinie, die die Abhängigkeit des von dem pneumatischen Kanal ausgesteuerten Bremsdruckwertes von den elektrischen Signalen des elektrischen Sensors darstellt. Bei einer Bremsanforderung durch Betätigung des Bremswertgebers kann der entsprechende Bremsdruckwert anhand der Kennlinien ermittelt werden.

Bei einem derartigen System kann ohne Verwendung eines Bremsdrucksensors die Bremspedal-Betätigung anhand der in der Brems-Steuereinrichtung gespeicherten Kennlinien als Anforderung eines spezifischen Bremsdrucks bewertet werden, um eine entsprechende Bremsung auszusteuern. Durch den Wegfall eines Bremsdrucksensors zur Ermittlung des ABS-Vordrucks können Kosten bei dennoch hoher Sicherheit eingespart werden.

Der Erfindung liegt die Aufgabe zugrunde, ein Bremsventil für ein Druckluft-Bremssystem, ein derartiges Druckluft-Bremssystem und ein Verfahren zum Herstellen des Bremsventils zu schaffen, die die Ausbildung eines sicheren Druckluft-Bremssystems mit geringen Herstellungs- oder Wartungskosten ermöglichen.

Diese Aufgabe wird durch ein Bremsventil nach Anspruch 1, ein Druckluft-Bremssystem nach Anspruch 10 ein Fahrzeug nach Anspruch 11 sowie ein Verfahren nach Anspruch 12 gelöst. Die Unteransprüche geben bevorzugte Weiterbildungen an.

Erfindungsgemäß ist demnach vorgesehen, in einem Bremsventil eine Kennlinien-Speichereinrichtung mit mindestens zwei gespeicherten Kennlinien und/oder Abhängigkeiten vorzusehen, so dass durch mindestens eine Ermittlungseinrichtung des Bremsventils auf Grundlage der mindestens zwei Kennlinien bzw. Abhängigkeiten eine Bremspedal-Betätigung bewertet bzw. umgerechnet werden kann. Die mechanische Bremspedal-Betätigung durch den Fahrer geht somit vorzugsweise über die Verstellung eines Betätigungselementes, z. B. einer Betätigungsstange, um einen Bremsventil-Stellweg ein, die durch mindestens einen Sensor gemessen wird, der in Abhängigkeit der Betätigung ein elektrisches Betätigungssignal erzeugt. Der Sensor kann zum Beispiel ein Wegsensor bzw. Hall-Sensor sein, der ein elektrisches Betätigungssignal erzeugt, das den Bremsventil-Stellweg des Betätigungselementes wiedergibt.

Das oder die so direkt ermittelte(n) Betätigungssignal(e) wird/werden jedoch nicht direkt als Sensornutzsignal(e) zu einer Brems-Steuereinrichtung eines Druckluft-Bremssystems zur Weiterverarbeitung ausgegeben, sondern mittels der mindestens einen Ermittlungseinrichtung und der mindestens zwei gespeicherten Kennlinien verarbeitet bzw. umgerechnet, wobei die mindestens zwei Kennlinien eine zuvor in einer druckorientierten Kalibrierung ermittelte Druckabhängigkeit und in einer wegorientierten Kalibrierung ermittelte Positionsabhängigkeit des Bremsventils enthalten.

Unter Druckabhängigkeit wird hierbei eine Abhängigkeit zwischen der Verstellung des Betätigungselementes des Bremsventils, d.h. dem Bremsventil-Stellweg, und dem dadurch vom Bremsventil ausgesteuerten Bremsventil-Ausgangsdruck, der über eine Bremsventil-Steuerleitung den Radbremsen zugeführt wird, verstanden. Die Positionsabhängigkeit charakterisiert hingegen den Zusammenhang zwischen einer prozentualen Stellposition des Betätigungselementes des Bremsventils, z.B. keine Betätigung des Betätigungselementes (0%) und eine volle Betätigung des Betätigungselementes (100%), und dem jeweils herbeigeführten Bremsventil-Stellweg, der durch die Betätigung des Bremspedals indirekt mittels einer mechanischen Übersetzung vorgegeben wird. Somit werden eine Druck-Weg-Abhängigkeit und eine Positions-Weg-Abhängigkeit herangezogen.

Somit können unabhängig voneinander zwei Sensornutzsignale ausgegeben werden, denen jeweils unterschiedliche Kennlinien zugeordnet sind und die das spezifische Verhalten genau dieses Bremsventils, z. B. seine Federsteifigkeiten, die tatsächlichen Durchlass-Querschnitte für die Druckluft in Abhängigkeit der Betätigung usw. berücksichtigt. Dabei unterscheiden sich die Sensornutzsignale voneinander, d.h. ein erstes Sensornutzsignal gibt die Druckabhängigkeit und ein zweites Sensornutzsignal gibt die Positionsabhängigkeit des Bremsventils an, so dass aus dem ersten Sensornutzsignal bei einer Betätigung des Bremspedals der ausgesteuerte Bremsventil-Ausgangsdruck und aus dem zweiten Sensornutzsignal die vom Fahrer indirekt über das Pedal eingestellte prozentuale Stellposition des Betätigungselementes ermittelt werden kann.

Somit sind jedem Sensornutzsignal unterschiedliche gespeicherte Kennlinien und/oder Abhängigkeiten (Druckabhängigkeit, Positionsabhängigkeit), mit denen das jeweilige Sensornutzsignal aus dem Betätigungssignal gewonnen wird, zugeordnet. Dadurch kann zum einen eine ausreichende Signalredundanz ausgebildet werden und zum anderen je nach Anwendung auf unterschiedliche Größen (Druck/Position) zurückgegriffen werden, um eine Fahrerbremsanforderung zu bewerten und somit beispielsweise eine parallel dazu automatisiert angeforderte Bremsung sicherer zu gestalten.

Vorteilhafterweise werden die Kennlinien bzw. Abhängigkeiten bereits bei der Herstellung des Bremsventils ermittelt, indem in einem KalibrierVorgang bzw. -Verfahren das Betätigungselement bzw. ein Aktuator unterschiedliche Bremsventil-Stellwege anfährt, wobei an den Druckluft-Eingang des Bremsventils ein pneumatischer Systemdruck angeschlossen wird, und vom Bremsventil an seinem pneumatischen Kanal ausgesteuerte analoge Bremsventil-Ausgangsdruck-Werte für die unterschiedlichen Bremsventil-Stellwege gemessen werden. Somit wird zunächst eine Druck-Weg-Abhängigkeit bzw. Druck-Betätigungssignal-Abhängigkeit erzeugt, die die Druck-Charakteristik des Bremsventils widergibt bzw. enthält (druckorientierte Kalibrierung).

Für die wegorientierte Kalibrierung kann das Bremsventil bzw. das Betätigungselement von dem Aktuator in verschiedene prozentuale Stellpositionen, z.B. 0% und 100%, verstellt und über den Sensor und das Betätigungssignal der entsprechend zugeordnete Bremsventil-Stellweg ermittelt werden, so dass eine Positions-Weg-Abhängigkeit bzw. Positions-Betätigungssignal-Abhängigkeit erzeugt wird, die die Positions-Charakteristik des Bremsventils wiedergibt bzw. enthält.

Diese Daten bzw. die aus diesen Messungen ermittelten Abhängigkeiten werden dann in der Kennlinien-Speichereinrichtung des Bremsventils als Bremsventil-Druck-Kennlinien bzw. Bremsventil-Positions-Kennlinien abgespeichert, die somit individuell bzw. spezifisch die Charakteristik dieses Bremsventils wiedergeben. Es können aber auch die Druck-Weg-Abhängigkeiten bzw. die Positions-Weg-Abhängigkeiten auf der Kennlinien-Speichereinrichtung des Bremsventils gespeichert sein. Bei einer Bremsung werden diese Kennlinien dann auf das Betätigungssignal angewendet und je nach herangezogener Kennlinie die Sensornutzsignale ausgegeben.

Auch baugleiche Bremsventile können aufgrund fertigungsbedingter Toleranzen unterschiedliche Kennlinien bzw. Abhängigkeiten aufweisen, wobei die Kennlinien insbesondere zueinander verschoben sein können, was bei steileren Kennlinien-Bereichen zu deutlichen Abweichungen führen kann. Indem bereits in dem Bremsventil die wegorientiert und druckorientiert kalibrierten mindestens zwei Kennlinien herangezogen werden, können somit mindestens zwei elektrische Sensornutzsignale ausgegeben werden, die einheitlich und standardisiert sind und von der Brems-Steuereinrichtung nicht mehr aufwändig weiterzuverarbeiten sind, da diese Verarbeitung bereits im Bremsventil stattfindet. Somit können Bremsventile ohne weiteren Aufwand ausgetauscht werden, d.h. es sind keine Änderungen in der Brems-Steuereinrichtung durchzuführen. Auch ein Austausch des Bremsventils gegen ein bauähnliches Gerät mit gleichartig erfolgter Kalibrierung ist möglich.

Das Bremsventil ist hierbei die Einheit, die durch das Bremspedal bzw. eine Betätigungsstange des Bremspedals als Betätigungselement angesteuert wird und in Abhängigkeit der Betätigung zum einen einen angeschlossenen Systemdruck, z. B. eines Druckluftspeichers bzw. Vorratsspeichers, als analogen Bremsventil-Ausgangsdruck durchsteuert und zum anderen mindestens zwei elektrische Sensornutzsignale ausgibt, die von der Brems-Steuereinrichtung aufgenommen und weiterverarbeitet werden können. Somit gehen von dem Bremsventil ein analoger pneumatischer Kanal und zwei elektrische Kanäle ab, wobei über jeden elektrischen Kanal ein Sensornutzsignal übertragen wird, wobei dazu beispielsweise eine elektrische Steuerleitung zwischen dem Bremsventil und der Brems-Steuereinrichtung vorgesehen ist. Die elektrischen Sensornutzsignale können dabei z. B. über einen fahrzeuginternen oder Bremssystem-internen Datenbus (CAN-Bus) an die Brems-Steuereinrichtung übermittelt werden, oder z.B. als pulsweitenmoduliertes elektrisches Sensornutzsignal.

Eine Signalbreite des pulsweitenmodulierten Sensornutzsignals kann hierbei vorzugsweise als proportionale Variation, insbesondere lineare Variation, von der Ermittlungseinrichtung aus dem jeweiligen Betätigungssignal ermittelt werden, so dass sich aus der Signalbreite des entsprechenden Sensornutzsignals in jeweils einem einfachen linearen Zusammenhang beispielsweise von der Brems-Steuereinrichtung der Bremsventil-Ausgangsdruck bzw. die prozentuale Stellposition und daraus indirekt der Grad der Pedal-Betätigung ermitteln lässt. Die Kennlinien selbst sind dazu allerdings nicht zwangsläufig auch linear. So kann die Bremsventil-Druck-Kennlinie, d.h. der Zusammenhang zwischen Betätigungssignal und Bremsventil-Ausgangsdruck, beispielsweise mit unterschiedlichen Steigungen, die eine Federsteifigkeit von auf das Betätigungselement wirkenden Federn angeben, ausgebildet sein. Die Bremsventil-Positions-Kennlinie, d.h. die Abhängigkeit zwischen Betätigungssignal und prozentualer Stellposition, hingegen, ist vorzugsweise linear verlaufend ausgebildet, kann grundsätzlich aber auch unterschiedliche Steigungen aufweisen.

Anders als zum Beispiel in der DE 10 2012 003 106 B3 wird die Kennlinie also nicht in der Brems-Steuereinrichtung bzw. einer angeschlossenen Speichereinheit, sondern bereits in dem Bremsventil selbst gespeichert, das in dem Druckluft-Bremssystem pneumatisch und elektrisch angeschlossen wird. Somit wird der Vorteil einer höheren Variabilität und Möglichkeit eines Austausches einzelner Komponenten erreicht, ohne dabei eine zusätzliche Parametrierung am bestehenden Bremssystem vorzunehmen; auch unterschiedliche, prinzipiell bauähnliche Bremsventile können direkt in einem Bremssystem eingesetzt werden, ohne dass hierzu zum Beispiel eine Speichereinrichtung der Brems-Steuereinrichtung zunächst entsprechend zu programmieren ist.

Die Kalibrierung kann insbesondere noch während der Produktion bzw. am Ende der Produktion des Bremsventils erfolgen während der finalen Dichtigkeits- und Funktionsprüfung. Das Bremsventil wird ohnehin bei der End-Überprüfung zum Beispiel auf Dichtigkeit und Druckcharakteristik überprüft, wobei es mit seinem Druckluft-Eingang an einen Systemdruck angeschlossen wird und die Dichtigkeit seines Druckluft-Eingangs und Druckluft-Ausgangs überprüft wird. Anschließend oder während dieser Prüfung kann die wegorientierte und druckorientierte Kalibrierung erfolgen, indem durch zum Beispiel den Aktuator eine Reihe von Bremsventil-Stellwegen abgefahren werden und die entsprechenden Kennlinien und Abhängigkeiten erzeugt und gespeichert werden. Somit erfolgt eine wegorientierte und druckorientierte Kalibrierung des Bremsventils mit geringem Aufwand, individuell und spezifisch für das Bremsventil, dessen interne Speichereinrichtung nachfolgend mit den Kennlinien-Daten für die spätere Umrechnung programmiert werden kann.

Zur Erzeugung der beiden Sensornutzsignale können gemäß einer Alternative zwei Sensoren vorgesehen sein, die jeweils in Abhängigkeit des Bremsventil-Stellweges ein Betätigungssignal erzeugen und an eine dem jeweiligen Sensor zugeordneten Ermittlungseinrichtung ausgeben. Jede Ermittlungseinrichtung gibt dann jeweils ein Sensornutzsignal wie oben beschrieben aus. Jede Ermittlungseinrichtung hat Zugriff auf die gespeicherten Kennlinien, wobei jede Ermittlungseinrichtung vorzugsweise auf unterschiedliche Kennlinien zurückgreift, wodurch jedem Sensornutzsignal eine andere Kennlinie zugeordnet wird. Dadurch wird eine Redundanz ausgebildet, da auf unterschiedliche Messwerte zurückgegriffen werden kann, um die Betätigung des Bremspedals durch den Fahrer zu erfassen, und dabei jede Messgröße von einem anderen Sensor ausgeht. Die beiden Sensornutzsignale können anschließend über die elektrische Steuerleitung parallel und unabhängig voneinander von dem Bremsventil an die Brems-Steuereinrichtung in standardisierter Weise übertragen werden.

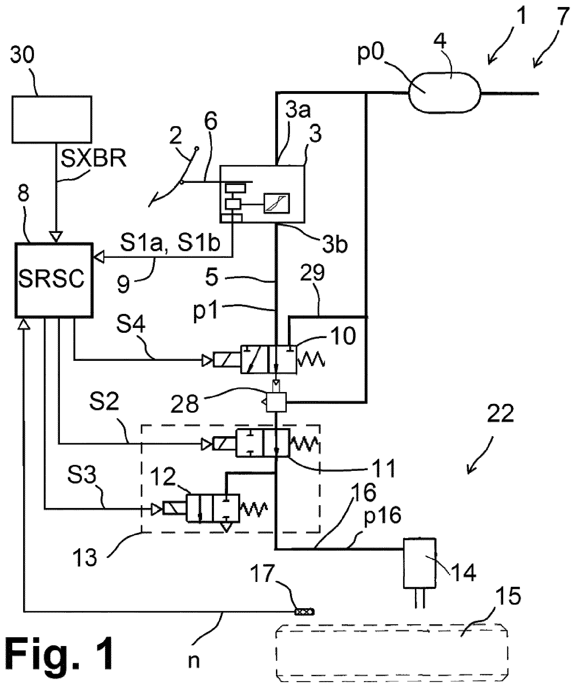

Alternativ können jedoch auch lediglich ein Sensor und eine Ermittlungseinrichtung vorgesehen sein, wobei die eine Ermittlungseinrichtung aus dem einen Betätigungssignal von dem einen Sensor zwei Sensornutzsignale über die beiden Kennlinien und/oder Abhängigkeiten (Druck, Position) erzeugt und unabhängig und parallel zueinander ausgibt.
Die Erfindung wird im Folgenden anhand der beiliegenden Zeichnungen näher erläutert. Es zeigen:
- Fig. 1: ein elektropneumatisches Schaltschema eines Druckluft-Bremssystems;
- Fig. 2a, 2b: vergrößerte Darstellungen des Bremsventils aus Fig. 1 in zwei unterschiedlichen Ausführungsformen;
- Fig. 3: ein Diagramm eines ausgesteuerten Bremsventil-Ausgangsdruckes sowie einer prozentualen Stellposition in Abhängigkeit eines gemessenen Bremsventil-Stellweges für zwei Bremsventile gleicher Bauart in dem Druckluft-Bremssystem der Figur 1;
- Fig. 4: Diagramm von Sensornutzsignalen der beiden Bremsventile in Abhängigkeit des Bremsventil-Stellweges;
- Fig. 5a: ein Diagramm mit den aus Figur 3 und 4 abgeleiteten Abhängigkeiten des Bremsventil-Ausgangsdruckes von einem ersten Sensornutzsignal für die beiden Bremsventile;
- Fig. 5b: ein Diagramm mit den aus Figur 3 und 4 abgeleiteten Abhängigkeiten der prozentualen Stellposition von einem zweiten Sensornutzsignal für die beiden Bremsventile;
- Fig. 6a, 6b: Anordnungen zur Kalibrierung eines Bremsventils gemäß Fig. 2a, 2b in zwei unterschiedlichen Ausführungen; und
- Fig. 7: ein Flussdiagramm eines Kalibrier-Verfahrens gemäß einer Ausführungsform der Erfindung.
Ein Druckluft-Bremssystem 1 eines Nutzfahrzeugs 7 ist in Figur 1 mit einem Bremskreis 22 gezeigt; im Allgemeinen sind mehrere Bremskreise 22 vorgesehen. Der Fahrer betätigt ein Bremspedal 2 und hierdurch ein Bremsventil 3, das Druckluft mit einem Systemdruck p0 von einem Druckluft-Vorratsspeicher 4 über seinen Druckluft-Eingang 3a aufnimmt und über seinen Druckluft-Ausgang 3b auf eine Bremsdruck-Steuerleitung 5 durchsteuert. Somit wird in Abhängigkeit der Betätigung des Bremspedals 2 durch den Fahrer durch das Bremsventil 3 ein analoger Bremsventil-Ausgangsdruck p1 auf die Bremsdruck-Steuerleitung 5 gelegt. Der analoge Bremsventil-Ausgangsdruck p1 wird gemäß der gezeigten Ausführungsform über eine in der Grundstellung offene Zuschalt-Ventileinrichtung 10, die hier als ein einziges Zuschaltventil 10, und zwar als 3/2-Wege-Solenoidventil ausgebildet ist, dem Bremskreis 22 zugeführt. Das Zuschaltventil 10 dient der wahlweisen Zuschaltung einer Fahrerassistenz-Funktion in Abhängigkeit eines externen Bremsanforderungssignals SXBR oder z. B. internen Bremsanforderungssignals SRSC, wie weiter unten beschrieben wird.

In dem Bremskreis 22 ist eine ABS-Ventileinrichtung 13 mit einem ABS-Einlassventil 11 und einem ABS-Auslassventil 12 vorgesehen, an die sich nachfolgend eine Bremsleitung 16 mit einer an einem Fahrzeugrad 15 vorgesehenen Radbremse 14 anschließt. Eine Brems-Steuereinrichtung 8 (Steuereinrichtung des Bremssystems) nimmt Raddrehzahlsignale n der an den Fahrzeugrädern 15 vorgesehenen Raddrehzahl-Sensoren 17 auf und gibt Steuersignale S2 und S3 als ABS-Steuersignale an die ABS-Ventileinrichtung 13 für eine Bremsschlupf-Regelung aus, mit den Phasen, den Bremsdruck p16 in der Bremsleitung 16 zu halten, zu senken oder zu erhöhen, wie es als solches bekannt ist.

Das Bremsventil 3 weist somit die Bremsdruck-Steuerleitung 5 als pneumatischen Ausgangs-Kanal auf. Weiterhin weist das Bremsventil 3 eine elektrische Steuerleitung 9 als elektrischen Ausgangs-Kanal auf, wobei über die elektrische Steuerleitung 9 mindestens zwei Sensornutzsignale S1a, S1b von dem Bremsventil 3 zu der Brems-Steuereinrichtung 8 ausgegeben werden können. Die elektrische Steuerleitung 9 kann hierzu in beliebiger Weise derartig ausgeführt sein, dass die beiden Sensornutzsignale S1a, S1b über die elektrische Steuerleitung 9 unabhängig voneinander an die Brems-Steuereinrichtung 8 übertragen werden können. Dazu kann die elektrische Steuerleitung 9 in beliebiger Weise eine zweikanalige Datenübertragung ermöglichen, beispielsweise über zwei in der elektrischen Steuerleitung 9 verlaufende Adern oder durch eine entsprechend verschlüsselte Übertragung der Sensornutzsignale S1a, S1b über lediglich eine Ader. Somit liegen zwei elektrische Ausgangs-Kanäle am Bremsventil 3 vor.

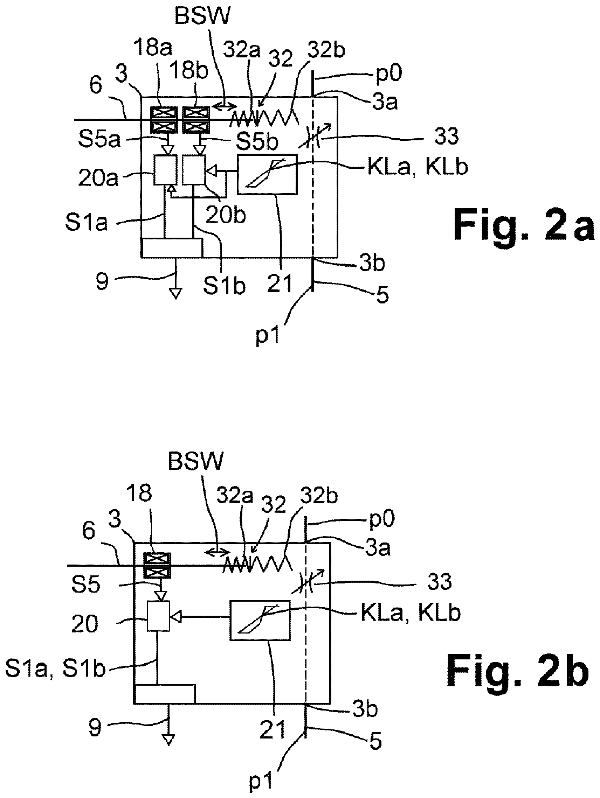

Das Bremsventil 3 weist gemäß der Detailvergrößerung in den Figuren 2a und 2b als Betätigungselement oder Betätigungsglied eine mit dem Bremspedal 2 in Wirkverbindung stehende und um einen Bremsventil-Stellweg BSW verstellbare Betätigungsstange 6 auf, durch die - in an sich bekannter Weise - zum Beispiel ein Durchlass-Querschnitt 33 des Bremsventils 3 zur Ausgabe des analogen Bremsventil-Ausgangsdruckes p1 auf die Bremsdruck-Steuerleitung 5 eingestellt wird.

An der Betätigungsstange 6 sind gemäß Fig. 2a zwei Wegsensoren 18a, 18b, z. B. Hall-Sensoren, jeweils zur Sensierung des Bremsventil-Stellweges BSW angeordnet. Die zwei Wegsensoren 18a, 18b erzeugen in Abhängigkeit des Bremsventil-Stellwegs BSW jeweils ein Betätigungssignal S5a, S5b und geben dieses an eine dem jeweiligen Wegsensor 18a, 18b zugeordneten Ermittlungseinrichtung 20a, 20b aus, die auf Grundlage von in einem Kennlinien-Speicher 21 des Bremsventils 3 gespeicherten Kennlinien KLa, KLb aus dem jeweiligen Betätigungssignal S5a, S5b das erste bzw. das zweite Sensornutzsignal S1a, S1b bilden, die z. B. als PWM-Signale oder Dateninhalt auf einem CAN-Bus ausgelegt sind, und über die elektrische Steuerleitung 9 an die Brems-Steuereinrichtung 8 unabhängig voneinander ausgegeben werden. Die Brems-Steuereinrichtung 8 kann anschließend aus den Sensornutzsignalen S1a, S1b direkt den Bremsventil-Ausgangsdruck p1 bzw. eine prozentuale Stellposition SP der Betätigungsstange 6 ermitteln, wobei ein erstes Sensornutzsignal S1a den Bremsventil-Ausgangsdruck p1 und ein zweites Sensornutzsignal S1b die prozentuale Stellposition SP repräsentieren. Die prozentuale Stellposition SP gibt hierbei eine normierte, prozentuale Betätigung der Betätigungsstange 6 infolge einer Betätigung des Bremspedals 2 an, d.h. keine Betätigung (0%) und volle Betätigung (100%).

Gemäß einer alternativen Ausführungsform in Fig. 2b kann aber auch lediglich ein Wegsensor 18 vorgesehen sein, dessen Betätigungssignal S5 an eine gemeinsame Ermittlungseinrichtung 20 ausgegeben wird, die beide Sensornutzsignale S1a, S1b über die Kennlinien KLa, KLb aus dem einen Betätigungssignal S5 erzeugt und über die elektrische Steuerleitung 9 ausgibt.

Der Bremsventil-Ausgangsdruck p1 kann bei offenem Zuschaltventil 10 und offenem Einlassventil 11 der ABS-Ventileinrichtung 13 direkt zu der Radbremse 14 geführt werden. Weiterhin können - in hier nicht gezeigter, aber bekannter Weise - zusätzliche Ventileinrichtungen, zum Beispiel für eine Achslastverteilung (ALB-Ventileinrichtung), vorgesehen sein.

Von einer externen Fahrerassistenz-Steuereinrichtung 30 kann zum Beispiel über den CAN-Bus ein externes Bremsanforderungs-Signal SXBR an die Brems-Steuereinrichtung 8 ausgegeben werden, woraufhin diese ein Zuschaltsignal S4 zum Umschalten des Zuschaltventils 10 ausgibt, das z. B. den Druckluft-Vorratsspeicher 4 oder auch einen anderen Druckluft-Vorratsspeicher mit dem Systemdruck p0 über eine Versorgungsleitung 29 an den Bremskreis 22 mit der ABS-Ventileinrichtung 13 legt. Die Brems-Steuereinrichtung 8 taktet über die Steuersignale S2, S3 die ABS-Ventileinrichtung 13 derartig, dass aus dem Systemdruck p0 der für die Fahrerassistenz-Funktion einzustellende analoge Betriebsbremsdruck p16 in der Bremsleitung 16 zu der Radbremse 14 eingestellt wird. Ergänzend kann auch ein internes Bremsanforderungssignal SRSC in dieser Weise verarbeitet werden, beispielsweise für eine Umkippverhinderung (RSC).

Eine genaue Kenntnis des vom Fahrer über das Bremsventil 3 ausgesteuerten analogen Bremsventil-Ausgangsdruckes p1 in der Brems-Steuerleitung 5 ist insbesondere für die ABS-Regelung, aber auch für die Einleitung einer derartigen fahrerunabhängigen externen (XBR) oder fahrerunabhängigen internen (RSC)-Bremsung wichtig, da das Bremssystem einen Zusammenhang zwischen Druckausteuerung und Fahrzeugreaktion (Verzögerung) bereits beim Anbremsen zur Erreichung einer genauen Umsetzung des Bremswunsches heranzieht, welcher aus Fahrerbremsungen, d.h. vom Fahrer über das Bremspedal verursachten Bremsanforderungen, ableitbar ist, und weiterhin an dem Zuschaltventil 10 zwischen dem Bremsventil-Ausgangsdruck p1 und dem Systemdruck p0 umgeschaltet wird und daher erhebliche Druckunterschiede vorliegen können. Die Brems-Steuereinrichtung 8 sollte daher den vorliegenden Bremsventil-Ausgangsdruck p1 berücksichtigen, da sonst beim Umschalten ruckartige Bremseingriffe auftreten können, die zu Instabilitäten des Fahrzeugs 7 führen können.

Auch aus der prozentualen Stellposition SP lassen sich Rückschlüsse auf eine vom Fahrer über das Bremspedal veranlasste Bremsanforderung ziehen, die beispielsweise einer Fahreranwesenheitserkennung dienen kann. Diese ist für z.B. für verschiedene Haltefunktionen wichtig, um sicherzustellen, dass der Fahrer ggf. selbst ausreichend in das Geschehen eingreifen kann. Grundsätzlich kann sich der Verlauf der prozentualen Stellposition SP auch von dem Verlauf des Bremsventil-Stellweges BSW unterscheiden, beispielsweise um weitere über die Lebensdauer des Bremsventils 3 bzw. des Fahrzeugs 7 auftretende Streuungen auszugleichen, wie z.B. eine Verschiebung der Nullpunktlage (prozentuale Stellposition von 0%) des Bremsventils 3 infolge von Widerständen in der Pedalbox.

Hierzu nimmt die Brems-Steuereinrichtung 8 über die beiden elektrischen Ausgangs-Kanäle bzw. die elektrische Steuerleitung 9 die beiden Sensornutzsignale S1a, S1b von dem Bremsventil 3 auf. Auf welche der beiden über die Sensornutzsignale S1a, S1b übermittelten Größen, d.h. den Bremsventil-Ausgangsdruck p1 und/oder die prozentuale Stellposition SP, die Brems-Steuereinrichtung 8 zurückgreift, ist somit abhängig von der jeweiligen Anwendung. Beispielsweise kann für eine ABS-Regelung oder für eine RSC-Bremsung lediglich auf den Bremsventil-Ausgangsdruck p1 zurückgegriffen werden, während zum Ermitteln, ob der Fahrer die Bremse überhaupt betätigt bzw. am Platz ist, ergänzend oder alternativ auf die prozentuale Stellposition SP zurückgegriffen werden kann. Es können aber auch beide Größen p1, SP gleichzeitig verwendet werden, um eine diversitäre Redundanz auszubilden, da zur Bewertung der angeforderten Bremsung auf zwei unterschiedliche Größen p1, SP zurückgegriffen wird, die beide dasselbe charakterisieren, nämlich die über das Bremspedal 2 angeforderte Bremsung des Fahrzeuges 7. Durch Verwendung von zwei Wegesensoren 18a, 18b gemäß Fig. 2a kann diese Redundanz weiter ausgebaut werden.

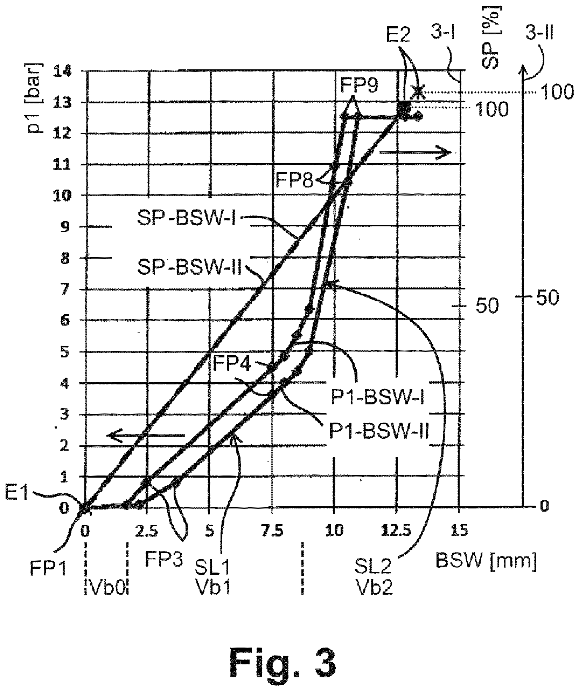

Nachfolgend wird die Ermittlung und Verarbeitung des oder der Betätigungssignale S5; S5a, S5b zu den Sensornutzsignalen S1a, S1b und die Verwendung in der Brems-Steuereinrichtung 8 detaillierter mit Bezug zu den Diagrammen der Figuren 3, 4, 5a und 5b erläutert, in denen jeweils Abhängigkeiten bzw. Kennlinien von zwei grundsätzlich baugleichen, aber aufgrund fertigungsbedingter Toleranzen etwas unterschiedlichen Bremsventilen 3, d.h. einem ersten Bremsventil 3-I und einem zweiten Bremsventil 3-II gezeigt sind; entsprechend sind die jeweiligen Abhängigkeiten bzw. Kennlinien mit -I und -II gekennzeichnet.

In Figur 3 ist der Bremsventil-Ausgangsdruck p1, beispielsweise in "bar", sowie die prozentuale Stellposition SP, beispielsweise in "%", gegenüber dem durch das Betätigungssignal S5; S5a, S5b angezeigten Bremsventil-Stellweg BSW, z. B. in "mm", gezeigt. Somit ergibt sich für jedes der Bremsventile 3-I, 3-II eine Druck-Weg-Abhängigkeit P1-BSW, die für die beiden Bremsventile 3-I, 3-II als P1-BSW-I und P1-BSW-II gezeigt ist, und eine Positions-Weg-Abhängigkeit SP-BSW, die für die beiden Bremsventile 3-I, 3-II als SP-BSW-I und SP-BSW-II gezeigt ist, wobei die beiden Positions-Weg-Abhängigkeiten SP-BSW-I, SP-BSW-II in Fig. 3 im Wesentlichen aufeinanderliegen und linear verlaufen, sich jedoch in den Endpunkten E2 unterscheiden. Jedem Bremsventil 3-I, 3-II ist in Fig. 3 eine Koordinatenachse für die prozentuale Stellposition in "%" zugeordnet, wobei die jeweiligen Endpunkte E1, E2 bei einem Stellpositions-Wert SPi von 100% liegen, was einer vollen Betätigung des jeweiligen Bremsventils 3-I, 3-II entspricht.

In dem Bremsventil 3 wird durch die Betätigungsstange 6 zum Beispiel über eine Federeinrichtung 32 mit zwei Federn 32a, 32b mit unterschiedlicher Feder-Charakteristik eine Ventilklappe zum Öffnen des Durchlass-Querschnitts 33 betätigt. Durch diese spezifische Feder-Ausbildung wird eine Öffnungs-Charakteristik als sogenannte "Feeling-Kurve" festgelegt, bei der kleine Betätigungen des Bremspedals 2 und somit auch kleine Bremsventil-Stellwege BSW in einem Anfangs-Verstellbereich Vb0 zunächst noch nicht zu einer Öffnung der Ventilklappe führen, das heißt es liegt ein Bremsventil-Ausgangsdruck p1=0 bar vor. In einem nachfolgendem ersten Verstellbereich Vb1 wird eine erste Federsteifigkeit SL1 der ersten Feder 32a als z. B. geringere erste Steigung relevant, und nachfolgend in einem zweiten Verstellbereich Vb2 eine zweite Federsteifigkeit SL2 der zweiten Feder 32b, die durch eine zweite, größere Steigung angegeben wird.

Somit wird zunächst eine allmähliche Druckerhöhung des Bremsventil-Ausgangsdruckes p1, und dann bei stärkerer Betätigung eine deutlichere Druckerhöhung des Bremsventil-Ausgangsdruckes p1 ermöglicht. Derartige "Feeling-Kurven" werden für einen Fahrer als angenehm empfunden.

Zur Definition der in Fig. 3 gezeigten Druck-Weg-Abhängigkeit P1-BSW sind Fixpunkte FPi mit i= 1, 2, 3, ... als Werte-Paare aus einem Bremsventil-Ausgangsdruck-Wert p1i und einem Bremsventil-Stellweg-Wert BSWi vorgesehen, zwischen denen die jeweilige Druck-Weg-Abhängigkeit P1-BSW interpoliert wird. In Fig. 3 sind der Übersichtlichkeit halber nur einige der Fixpunkte FPi bezeichnet. Die Fixpunkte FPi dienen dazu, charakteristische Bereiche der Druck-Weg-Abhängigkeit P1-BSW festzulegen:
Der erste Fixpunkt FP1 liegt hier zunächst bei BSW=0 und somit p1=0, entsprechend keiner Bremspedal-Betätigung. Der nachfolgende zweite Fixpunkt FP2 kann zum Beispiel bei einem Bremsventil-Stellweg-Wert BSWi vorliegen, bei dem ein erster Druckanstieg erfolgt, wobei hier zum Beispiel ein Bremsventil-Ausgangsdruck-Wert p1i von p1 kleiner/gleich 0,1 bar vorliegt. Im dritten Fixpunkt FP3 liegt bei dem entsprechenden Bremsventil-Stellweg-Wert BSWi zum Beispiel ein Druck von p1=0,8 bar vor; nachfolgend werden dann bei dem Übergang der linearen Abschnitte der FederKennlinien mehrere Fixpunkte FPi gesetzt, sodass die Druck-Weg-Abhängigkeit P1-BSW durch einen Linien-Zug oder Strecken-Zug aus mehreren Abschnitten gebildet wird, wobei hier zum Beispiel zwischen FP3 und FP4 ein längerer gerader Abschnitt, nachfolgend ein Übergang und zwischen FP7 und FP8 ein weiterer gerader Abschnitt der zweiten Feder 32b festgelegt ist. Bei FP9 ist bereits eine volle Bremsbetätigung erreicht, sodass die weitere Betätigung auf FP10 zu keiner weiteren Erhöhung des Bremsventil-Ausgangsdruckes p1 führt. Bei FP10 ist dann somit eine maximale Betätigung des Bremspedals 2 erreicht, das heißt das Bremspedal 2 ist vollständig betätigt.

Die Druck-Weg-Abhängigkeit P1-BSW kann somit für jedes der Bremsventile 3-I, 3-II zum Beispiel als Tupel von Fixpunkten FPi, jeweils als Werte-Paare (p1i, BSWi), definiert sein.

In entsprechender Weise wird auch die Positions-Weg-Abhängigkeit SP-BSW für jedes der Bremsventile 3-I, 3-II festgelegt, wobei für diese gemäß Fig. 3 eine lineare Abhängigkeit angenommen wird, so dass für jede Positions-Weg-Abhängigkeit SP-BSW-I, SP-BSW-II lediglich zwei Streckenpunkte Ei, mit i = 1, 2, die beispielsweise die Endpunkte sein können, zur Definition ausreichend sind. So ist in Fig. 3 ein erster Streckenpunkt E1 für beide Positions-Weg-Abhängigkeiten SP-BSW-I, SP-BSW-II durch das Werte-Paar (BSWi, SPi) = (0,0) gebildet und für das jeweilige Bremsventil 3-I, 3-II ein zweiter Streckenpunkt E2 durch (BSWi, SPi) = (13mm, 100%) bzw. (BSWi, SPi) = (13.5mm, 100%). Es können aber auch mehrere Streckenpunkte Ei zur Definition eines nicht-linearen Verhaltens zwischen dem Bremsventil-Stellweg BSW und der prozentualen Stellposition SP vorgesehen sein.

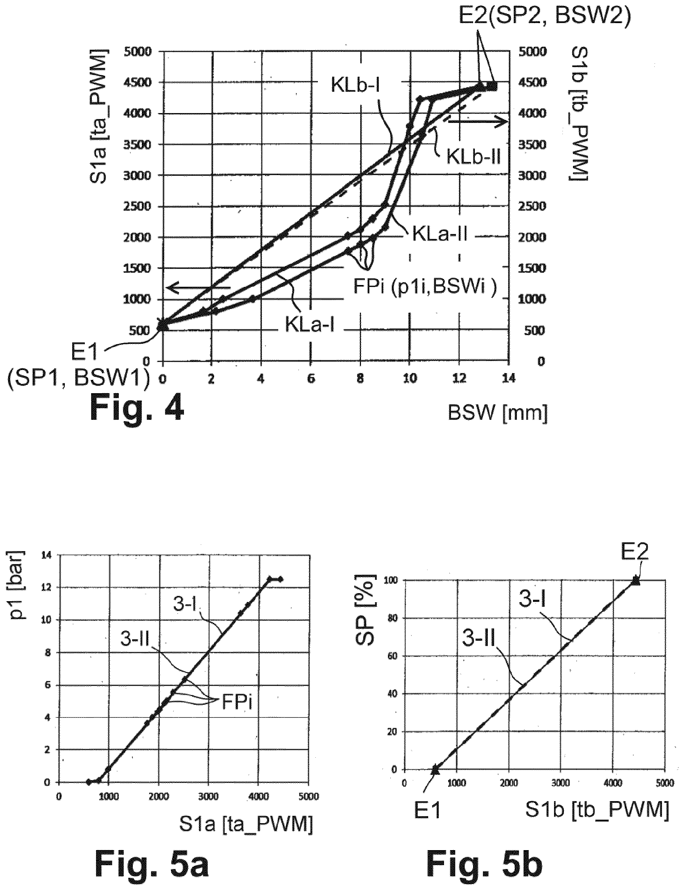

Fig. 4 zeigt die von der oder den Ermittlungseinrichtungen 20; 20a, 20b herangezogenen Bremsventil-Druck-Kennlinien KLa, d.h. wiederum die beiden Bremsventil-Druck-Kennlinien KLa-I und KLa-II für die beiden baugleichen Bremsventile 3, bzw. die herangezogenen Bremsventil-Positions-Kennlinien KLb, d.h. wiederum die beiden Bremsventil-Positions-Kennlinien KLb-I und KLb-II für die beiden baugleichen Bremsventile 3. Die Bremsventil-Druck-Kennlinie KLa ordnet dem über das jeweilige Betätigungssignal S5; S5a erhaltenen Bremsventil-Stellweg BSW des entsprechenden Bremsventils 3 ein erstes Sensornutzsignal S1a, das als PWM-Signal mit einer ersten Signalbreite ta_PWM oder über einen CAN-Bus ausgegeben wird und das den ausgesteuerten Bremsventil-Ausgangsdruck p1 repräsentiert, zu. Die Bremsventil-Positions-Kennlinie KLb ordnet dem über das jeweilige Betätigungssignal S5; S5b erhaltenen Bremsventil-Stellweg BSW des entsprechenden Bremsventils 3 ein zweites Sensornutzsignal S1b, das als PWM-Signal mit einer zweiten Signalbreite tb_PWM oder über einen CAN-Bus ausgegeben wird und das die prozentuale Stellposition SP repräsentiert, zu.

Die jeweilig genannten Kennlinien KLa, KLb können in der Speichereinrichtung 21 gespeichert sein; grundsätzlich können aber auch die Druck-Weg-Abhängigkeiten P1-BSW bzw. die Positions-Weg-Abhängigkeiten SP-BSW für das jeweilige Bremsventil 3 in der Speichereinrichtung 21 gespeichert werden, so dass die jeweilige Ermittlungseinrichtung 20; 20a, 20b auf deren Grundlage das jeweilige Sensornutzsignal S1a, S1b ermittelt; relevant ist, dass die Ermittlungseinrichtung 20; 20a, 20b das jeweilige Sensornutzsignal S1a, S1b erzeugt und ausgibt.

Bei einer Betätigung des Bremspedals 2 wird somit in dem Bremsventil 3 zunächst von dem jeweiligen Wegsensor 18; 18a, 18b ein Betätigungssignal S5; S5a, S5b erzeugt, aus dem dann von der jeweiligen Ermittlungseinrichtung 20; 20a, 20b auf Grundlage der gespeicherten Kennlinien KLa, KLb (oder P1-BSW bzw. SP-BSW) das jeweilige Sensornutzsignal S1a, S1b ermittelt und an die Brems-Steuereinrichtung 8 zur weiteren Verarbeitung ausgegeben wird.

Gemäß Fig. 5a, 5b ist das jeweilige Sensornutzsignal S1a, S1b mit der jeweiligen Signalbreite ta_PWM, tb_PWM für beide Bremsventile 3-I und 3-II in einer linearen Abhängigkeit gezeigt, wobei sich die Funktionen p1(S1a) in Fig. 5a bzw. SP (S1b) in Fig. 5b (mit der prozentualen, normierten Stellposition SP) jeweils decken, d.h. jeweils identisch sind, auch wenn die Fixpunkte FPi der Abhängigkeiten P1-BSW-I, P1-BSW-II bzw. die Streckenpunkte Ei der Abhängigkeiten SP-BSW-I und SP-BSW-II und entsprechend KLa-I und KLa-II bzw. KLb-I und KLb-II teilweise verschieden sind. Somit kann durch die Brems-Steuereinrichtung 8 für jedes eingesetzte Bremsventil 3 ein einheitliches, identisches Sensornutzsignal S1a, S1b verwendet werden; die spezifischen Toleranzen und Ungleichheiten können somit erfindungsgemäß durch die gespeicherten Kennlinien KLa, KLb bereits in dem Bremsventil 3 berücksichtigt und kompensiert werden und müssen von der Brems-Steuereinrichtung 8 nicht mehr erfasst und einbezogen werden. Auch ein Austausch eines Bremsventils 3 führt - ohne Umprogrammierung der Brems-Steuereinrichtung 8 - zu keiner Änderung des Bremsverhaltens.

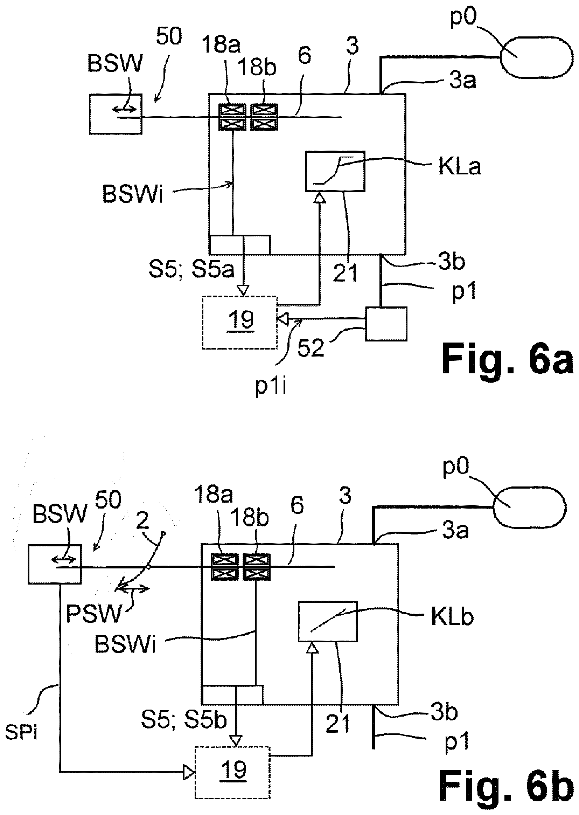

Die Kennlinien KLa, KLb (oder P1-BSW bzw. SP-BSW) werden gemäß Figuren 6a, 6b in einem Kalibrier-Prozess bzw. Kalibrier-Verfahren ermittelt, das bereits in der Fertigung des jeweiligen Bremsventils 3, insbesondere End-of-Line bei einer Abschlussprüfung, durchgeführt wird. Bei der Abschlussprüfung werden die Bremsventile 3 zunächst in üblicher Weise einer Prüfung auf Dichtigkeit usw. unterzogen, wozu sie gemäß Fig. 6a, 6b mit ihrem Druckluft-Eingang 3a an einen Vorratsdruck p0 angeschlossen werden und an ihren Druckluft-Ausgang 3b ein Drucksensor 52 angeschlossen wird.

Weiterhin wird zur druckorientierten Kalibrierung gemäß Fig. 6a ein Aktuator 50 eingesetzt, der simuliert, wie die Betätigungsstange 6 im Betrieb des Bremsventils 3 verstellt wird, wobei das oder die von dem entsprechenden Wegsensor 18; 18a erzeugten Betätigungssignale S5; S5a beispielsweise von einer Messvorrichtungs-Steuereinrichtung 19 aufgenommen werden. Hierbei werden durch den Bremsventil-Stellweg BSW, der aus den Betätigungssignalen S5; S5a folgt, die Fixpunkte FP1 bis FP10 der Figur 3 abgefahren, und über den Drucksensor 52 der durchgesteuerte Bremsventil-Ausgangsdruck p1 gemessen und in der Messvorrichtungs-Steuereinrichtung 19 dem Bremsventil-Stellweg BSW zugeordnet, so dass die entsprechenden Werte-Paare aus den Bremsventil-Stellweg-Werten BSWi und den Bremsventil-Ausgangsdruck-Werten p1i erzeugt werden.

In identischer Weise kann gemäß Fig. 6b mit dem Aktuator 50 direkt ein Bremsventil-Stellweg BSW eingestellt werden, der einer bestimmten prozentualen Stellposition SP entspricht, und in Abhängigkeit davon der Bremsventil-Stellweg BSW über den entsprechenden Wegsensor 18; 18b bzw. über das jeweilige Betätigungssignal S5; S5b ermittelt werden, so dass auch eine wegorientierte Kalibrierung in der Messvorrichtungs-Steuereinrichtung 19 erfolgen kann, in der die Streckenpunkte Ei abgefahren und daraus die Werte-Paare aus den Bremsventil-Stellweg-Werten BSWi und den Stellpositions-Werten SPi erzeugt werden. Der Bremsventil-Stellweg BSW ist hierbei in Abhängigkeit des Verhaltens des Bremspedals 2 bzw. der Pedalbox mit einem Pedal-Stellweg PSW für das Bremspedal korreliert.

Somit kann in einem derartigen Kalibrier-Verfahren direkt die Druck-Weg-Abhängigkeit P1-BSW oder die Bremsventil-Druck-Kennlinie KLa bzw. die Positions-Weg-Abhängigkeit SP-BSW bzw. die Bremsventil-Positions-Kennlinie KLb ermittelt und in der Speichereinheit 21 nicht-flüchtig gespeichert werden, so dass im Betrieb auf die für das entsprechende Bremsventil 3 gültige Kennlinie KLa, KLb zurückgegriffen werden kann. Hierdurch erfolgt eine druckorientierte bzw. eine wegorientierte Kalibrierung des Bremsventils 3.

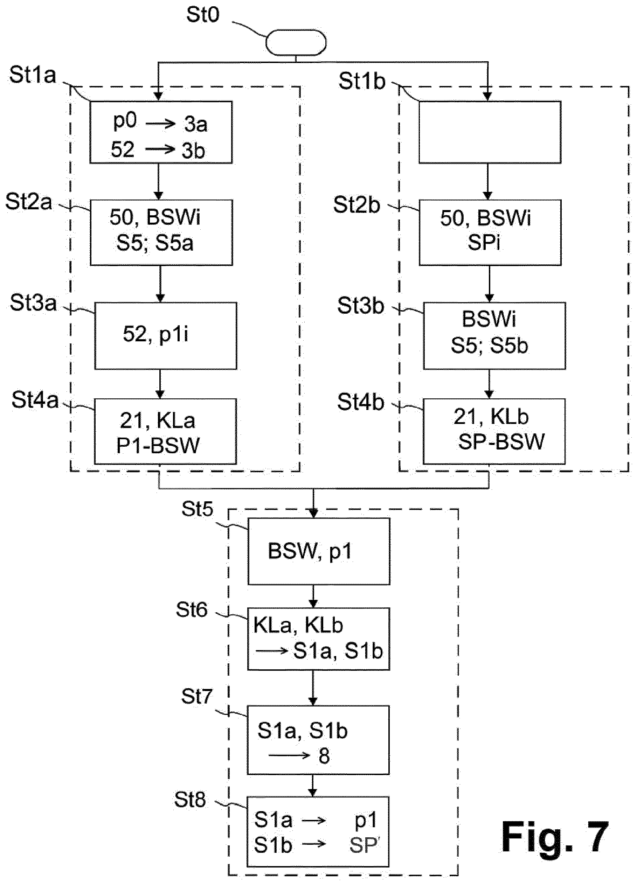

Somit wird in dem Herstellungs-Prozess der Figur 7 nach dem Start in Schritt St0 nachfolgend gemäß Schritt St1a der Vorratsspeicher 4 bzw. ein Systemdruck p0 an den Druckluft-Eingang 3a des Bremsventils 3 angeschlossen, und an den Druckluft-Ausgang 3b der Drucksensor 52 angeschlossen; dieser Schritt kann Teil der vorhergehenden Dichtigkeitsprüfung sein. Nachfolgend wird in Schritt St2a der Aktuator 50 aktiviert und dadurch verschiedene Bremsventil-Stellwege BSW eingestellt (s. Fig. 6a), die jeweils als Betätigungssignal S5; S5a gemessen werden, wobei entsprechend die Fixpunkte FPi sukzessive abgefahren werden. In Schritt St3a wird - gleichzeitig mit dem Schritt St2a - jeweils in den entsprechend eingestellten Bremsventil-Stellweg-Werten BSWi der jeweilige Druckwert p1i von dem Drucksensor 52 gemessen, wobei diese Messwerte von der Messvorrichtungs-Steuereinrichtung 19 aufgenommen werden, und nachfolgend in Schritt St4a die Bremsventil-Druck-Kennlinie KLa oder die Druck-Weg-Abhängigkeit P1-BSW z. B. als Werte-Tupel der Fixpunkte FPi gebildet und in der Speichereinrichtung 21 abgespeichert wird.

Für die wegorientierte Kalibrierung (s. Fig. 6b), die den Schritten St1a bis St4a vorangeht oder nachfolgt, ist in einem Schritt St1b vorgesehen, die Betätigungsstange 6 des Bremsventils 3 mit dem Aktuator 50 zu verbinden. In einem Schritt St2b wird der Aktuator 50 aktiviert, der auf die Betätigungsstange 6 des Bremsventils 3 wirkt, und dadurch verschiedene Bremsventil-Stellwege BSW eingestellt, die einer bestimmten prozentualen Stellposition SP entsprechen, wobei die Streckenpunkte Ei gemäß Fig. 3 abgefahren werden und diese beispielsweise einem unbetätigten Zustand des Bremsventils 3 (prozentualer Stellpositions-Wert SP1=0%) und einem voll betätigten Zustand des Bremsventils 3 (prozentualer Stellpositions-Wert SP2 = 100%) zugeordnet sind. In einem Schritt St3b werden - gleichzeitig mit dem Schritt St2b - von den entsprechenden Wegsensoren 18; 18b die Bremsventil-Stellwege BSW jeweils über das Betätigungssignal S5; S5b gemessen. Diese Messwerte werden von der Messvorrichtungs-Steuereinrichtung 19 aufgenommen, und nachfolgend in Schritt St4b die Bremsventil-Positions-Kennlinie KLb oder die Positions-Weg-Abhängigkeit SP-BSW z. B. als Werte-Tupel der Streckenpunkte Ei gebildet und in der Speichereinrichtung 21 abgespeichert.

Der Kalibrier-Prozess in der Bremsventil-Druck-Kennlinie KLa bzw. in der Bremsventil-Positions-Kennlinie KLb erfolgt somit in Schritt St1a bis St4a bzw. St1b bis St4b einmalig bei der Herstellung und Kalibrierung des Bremsventils 3. Er kann grundsätzlich nachher erneuert werden; dies ist jedoch nicht erforderlich.

Nach der Herstellung und Kalibrierung wird im Betrieb bei einer Betätigung des Bremsventils 3 z.B. mittels des Bremspedals 2 um den Pedal-Stellweg PSW somit
- gemäß Schritt St5 zum einen der analoge Bremsventil-Ausgangsdruck p1 durchgesteuert und weiterhin ein Bremsventil-Stellweg BSW als Betätigungssignal S5; S5a, S5b ermittelt;
- gemäß Schritt St6 von der jeweiligen Ermittlungseinrichtung 20; 20a, 20b aufgrund der jeweiligen Kennlinie KLa, KLb oder der jeweiligen Abhängigkeit P1-BSW, SP-BSW auf Basis des Bremsventil-Stellweges BSW die beiden Sensornutzsignale S1a, S1b ermittelt;
- in Schritt St7 die Sensornutzsignale S1a, S1b ausgegeben an die Brems-Steuereinrichtung 8;
- wobei die Brems-Steuereinrichtung 8 nachfolgend in Schritt St8 aus den beiden Sensornutzsignalen S1a, S1b direkt und linear den Bremsventil-Ausgangsdruck p1 bzw. die prozentuale Stellposition SP entnimmt und zur Ausgabe der Steuersignale S2, S3 und ggf. S4 heranziehen kann.

### Bezugszeichenliste (Teil der Beschreibung)

- 1: Druckluft-Bremssystem
- 2: Bremspedal
- 3 (-I,-II): Bremsventil (erstes/zweites)
- 3a: Druckluft-Eingang
- 3b: Druckluft-Ausgang
- 4: Druckluft-Vorratsspeicher
- 5: Bremsdruck-Steuerleitung
- 6: Betätigungsstange des Bremsventils 3
- 7: Fahrzeug, insbesondere Nutzfahrzeug
- 8: Brems-Steuereinrichtung (Steuereinrichtung des Bremssystems)
- 9: elektrische Steuerleitung
- 10: Zuschaltventil
- 11: ABS-Einlassventil
- 12: ABS-Auslassventil
- 13: ABS-Ventileinrichtung
- 14: Radbremse
- 15: Fahrzeugrad
- 16: Bremsleitung
- 17: Raddrehzahl-Sensor
- 18: Wegsensor
- 18a: erster Wegsensor
- 18b: zweiter Wegsensor
- 19: Messvorrichtungs-Steuereinrichtung
- 20: Ermittlungseinrichtung
- 20a: erste Ermittlungseinrichtung
- 20b: zweite Ermittlungseinrichtung
- 21: Kennlinien-Speicher
- 22: Bremskreis
- 28: Relaisventil
- 29: Versorgungsleitung
- 30: externe Fahrerassistenz-Steuereinrichtung
- 32: Federeinrichtung im Bremsventil 3
- 32a: erste Feder
- 32b: zweite Feder
- 33: Durchlass-Querschnitt
- 50: Aktuator

- 52: Drucksensor

- BSW: Bremsventil-Stellweg
- BSWi: Bremsventil-Stellweg-Werte
- Ei: Streckenpunkte
- FPi: Fixpunkte als Zahlentupel aus BSWi und p1i
- i: Index
- KLa: Bremsventil-Druck-Kennlinie
- KLa-I: erste Bremsventil-Druck-Kennlinie
- KLa-II: zweite Bremsventil-Druck-Kennlinie
- KLb: Bremsventil-Positions-Kennlinie
- KLb-I: erste Bremsventil-Positions-Kennlinie
- KLb-II: zweite Bremsventil-Positions-Kennlinie
- n: Raddrehzahlsignal
- p0: Systemdruck
- p1: analoger Bremsventil-Ausgangsdruck in der Brems-Steuerleitung 5
- P1-BSW: Druck-Weg-Abhängigkeit
- P1-BSW-I: erste Druck-Weg-Abhängigkeit
- P1-BSW-II: zweite Druck-Weg-Abhängigkeit
- p1i: Bremsventil-Ausgangsdruck-Wert
- p16: analoger Betriebsbremsdruck in der Bremsleitung 16
- PSW: Pedal-Stellweg
- S1a: erstes Sensornutzsignal
- S1b: zweites Sensornutzsignal
- S2, S3: Steuersignale an die ABS-Sperrventile 11, 12
- S4: Zuschalt-Signal
- S5: Betätigungssignal
- S5a: erstes Betätigungssignal
- S5b: zweites Betätigungssignal
- SL1: erste Federsteifigkeit als erste Steigung
- SL2: zweite Federsteifigkeit als zweite Steigung
- SRSC: internes, Fahrer-unabhängiges Bremsanforderungs-Signal (Roll Stability Control)
- SP: prozentuale Stellposition
- SPi: Stellpositions-Wert
- SP-BSW: Positions-Weg-Abhängigkeit
- SP-BSW-I: erste Positions-Weg-Abhängigkeit
- SP-BSW-II: zweite Positions-Weg-Abhängigkeit
- SXBR: externes Bremsanforderungs-Signal (eXternal Brake Request)
- ta_PMW: erste Signalbreite
- tb_PMW: zweite Signalbreite
- Vb0: Anfangs-Verstellbereich
- Vb1: erster Verstellbereich
- Vb2: zweiter Verstellbereich

- St0-St8: Schritte des Verfahrens, dabei
- St1a - St4a: Schritte des Kalibrierverfahrens der Bremsventil-Druck-Kennlinie KLa,
- St1b - St4b: Schritte des Kalibrierverfahrens der Bremsventil-Positions-Kennlinie KLb
- St5 - St8: Schritte des Bremsverfahrens

## Patentansprüche

1. Bremsventil (3) für ein Druckluft-Bremssystem (1) eines Nutzfahrzeugs (7), wobei das Bremsventil (3) durch ein Bremspedal (2) ansteuerbar und zur Ausgabe eines analogen Bremsventil-Ausgangsdruckes (p1) sowie von elektrischen Sensornutzsignalen (S1a, S1b) jeweils in Abhängigkeit der Betätigung des Bremspedals (2) vorgesehen ist,
wobei das Bremsventil (3) einen Druckluft-Eingang (3a) zum Anschluss an einen Systemdruck (p0), einen Druckluft-Ausgang (3b) zum Anschluss einer Brems-Steuerleitung (5), mindestens einen Sensor (18; 18a, 18b) zur Ermittlung eines Bremsventil-Stellweges (BSW) eines mit dem Bremspedal (2) in Wirkverbindung stehenden Betätigungselementes (6) des Bremsventils (3) und eine Kennlinien-Speichereinrichtung (21) mit mindestens zwei gespeicherten Kennlinien (KLa, KLb) und/oder Abhängigkeiten (P1-BSW, SP-BSW) sowie mindestens eine Ermittlungseinrichtung (20; 20a, 20b) aufweist und zur Ausgabe eines ersten Sensornutzsignals (S1a) vorgesehen ist, das den Bremsventil-Ausgangsdruck (p1) repräsentiert, und
- der mindestens eine Sensor (18; 18a, 18b) zum Erzeugen eines Betätigungssignals (S5; S5a, S5b) in Abhängigkeit des Bremsventil-Stellweges (BSW) des Betätigungselementes (6) ausgebildet ist, und
- die mindestens eine Ermittlungseinrichtung (20; 20a, 20b) ausgebildet ist zum Erzeugen des ersten Sensornutzsignals (S1a) aus dem mindestens einen Betätigungssignal (S5; S5a, S5b) in Abhängigkeit der in dem Kennlinien-Speicher (21) gespeicherten mindestens zwei Kennlinien (KLa, KLb) und/oder Abhängigkeiten (P1-BSW, SP-BSW), **dadurch gekennzeichnet,**
- **dass** das Bremsventil (3) weiter zur Ausgabe eines zweiten Sensornutzsignals (S1b), das eine prozentuale Stellposition (SP) des Betätigungselementes (6) repräsentiert, vorgesehen ist,
- **dass** die mindestens eine Ermittlungseinrichtung (20; 20a, 20b) ausgebildet ist zum Erzeugen des ersten Sensornutzsignals (S1a) aus dem mindestens einen Betätigungssignal (S5; S5a) in Abhängigkeit einer in dem Kennlinien-Speicher (21) gespeicherten Bremsventil-Druck-Kennlinie (KLa) und/oder einer Druck-Weg-Abhängigkeit (P1-BSW) und zum Erzeugen des zweiten Sensornutzsignals (S1b) aus dem mindestens einen Betätigungssignal (S5; S5b) in Abhängigkeit einer in dem Kennlinien-Speicher (21) gespeicherten Bremsventil-Positions-Kennlinie (KLb) und/oder einer Positions-Weg-Abhängigkeit (SP-BSW),
- **dass** die mindestens eine Ermittlungseinrichtung (20; 20a) ausgebildet ist, über die gespeicherte Bremsventil-Druck-Kennlinie (KLa) bzw. die Druck-Weg-Abhängigkeit (P1-BSW) dem mindestens einen Betätigungssignal (S5; S5a) das erste Sensornutzsignal (S1a) zuzuordnen, wobei das erste Sensornutzsignal (S1a) den analog ausgesteuerten Bremsventil-Ausgangsdruck (p1) repräsentiert,
- und **dass** die gespeicherte Bremsventil-Druck-Kennlinie (KLa) und/oder die Druck-Weg-Abhängigkeit (P1-BSW) einen nicht-linearen Zusammenhang zwischen dem Bremsventil-Ausgangsdruck (p1) und dem Bremsventil-Stellweg (BSW) angibt, und die gespeicherte Bremsventil-Positions-Kennlinie (KLb) und/oder die Positions-Weg-Abhängigkeit (SP-BSW) einen linearen Zusammenhang zwischen der prozentualen Stellposition (SP) und dem Bremsventil-Stellweg (BSW) angibt.

2. Bremsventil (3) nach Anspruch 1, **dadurch gekennzeichnet, dass** die mindestens eine Ermittlungseinrichtung (20; 20b) ausgebildet ist, über die gespeicherte Bremsventil-Positions-Kennlinie (KLb) bzw. die Positions-Weg-Abhängigkeit (SP-BSW) dem mindestens einen Betätigungssignal (S5; S5b) das zweite Sensornutzsignal (S1b) zuzuordnen, wobei das zweite Sensornutzsignal (S1b) die prozentuale Stellposition (SP) des Bremspedals (2) repräsentiert.

3. Bremsventil (3) nach Anspruch 2, **dadurch gekennzeichnet, dass** die mindestens eine Ermittlungseinrichtung (20; 20b) ausgebildet ist, das zweite Sensornutzsignal (S1b) als lineare Abhängigkeit der prozentualen Stellposition (SP) von dem Bremsventil-Stellweg (BSW) zu erzeugen und auszugeben.

4. Bremsventil (3) nach einem der Ansprüche 1 bis 3, **dadurch gekennzeichnet, dass** die mindestens eine Ermittlungseinrichtung (20; 20a, 20b) ausgebildet ist, die Sensornutzsignale (S1a, S1b) durch proportionale Variation, insbesondere lineare Variation, einer Signalbreite (ta_PWM, tb_PWM) zu erzeugen und auszugeben.

5. Bremsventil (3) nach Anspruch 1, **dadurch gekennzeichnet, dass** die Bremsventil-Druck-Kennlinie (KLa) bzw. die Druck-Weg-Abhängigkeit (P1-BSW) mindestens zwei lineare Bereiche (Vb1, Vb2) mit unterschiedlichen Steigungen (SL1, SL2) aufweisen, wobei die Steigungen (SL1, SL2) den Federsteifigkeiten zweier Federn (32a, 32b) einer Feder-Einrichtung (32) des Bremsventils (3) oder des Bremspedals (2) zugeordnet sind oder eine nichtlineare Federkennlinie abschnittsweise linear nachbilden.

6. Bremsventil (3) nach einem der vorhergehenden Ansprüche, **dadurch gekennzeichnet, dass** die Kennlinien (KLa, KLb) Fixpunkte (FPi) bzw. Streckenpunkte (Ei) als Werte-Paare aufweisen zur Interpolation der Kennlinien (KLa, KLb).

7. Bremsventil (3) nach einem der vorhergehenden Ansprüche, **dadurch gekennzeichnet, dass** das Bremsventil (3) lediglich einen Sensor (18) und eine Ermittlungseinrichtung (20) aufweist, wobei der Sensor (18) ausgebildet ist, ein Betätigungssignal (S5) in Abhängigkeit des Bremsventil-Stellweges (BSW) zu erzeugen und an die Ermittlungseinrichtung (20) auszugeben und die lediglich eine Ermittlungseinrichtung (20) ausgebildet ist, aus dem einen Betätigungssignal (S5) in Abhängigkeit der in dem Kennlinien-Speicher (21) gespeicherten mindestens zwei Kennlinien (KLa, KLb) und/oder Abhängigkeiten (P1-BSW, SP-BSW) zwei unterschiedliche Sensornutzsignale (S1a, S1b) zu erzeugen und auszugeben.

8. Bremsventil (3) nach einem der Ansprüche 1 bis 6, **dadurch gekennzeichnet, dass** das Bremsventil (3) zwei Sensoren (18a, 18b) und zwei Ermittlungseinrichtungen (20a, 20b) aufweist, wobei ein erster Sensor (18a) ausgebildet ist, ein erstes Betätigungssignal (S5a) in Abhängigkeit des Bremsventil-Stellweges (BSW) zu erzeugen und an eine erste Ermittlungseinrichtung (20a) auszugeben und ein zweiter Sensor (18b) ausgebildet ist, ein zweites Betätigungssignal (S5b) an eine zweite Ermittlungseinrichtung (20b) auszugeben, wobei
die erste Ermittlungseinrichtung (20a) ausgebildet ist, aus dem ersten Betätigungssignal (S5a) in Abhängigkeit der in dem Kennlinien-Speicher (21) gespeicherten Kennlinien (KLa) und/oder Abhängigkeiten (P1-BSW) das erste Sensornutzsignal (S1a) zu erzeugen und die zweite Ermittlungseinrichtung (20b) ausgebildet ist, aus dem zweiten Betätigungssignal (S5b) in Abhängigkeit der in dem Kennlinien-Speicher (21) gespeicherten Kennlinien (KLb) und/oder Abhängigkeiten (SP-BSW) das zweite Sensornutzsignal (S1b) zu erzeugen.

9. Bremsventil (3) nach einem der vorhergehenden Ansprüche, **dadurch gekennzeichnet, dass** der mindestens eine Sensor (18; 18a, 18b) ein Wegsensor, insbesondere ein Hall-Sensor (18; 18a, 18b) zur Ermittlung des Bremsventil-Stellweges (BSW) des mit dem Bremspedal (2) in Wirkverbindung stehenden Betätigungselementes (6) zur Einstellung eines Durchlass-Querschnittes (33) des Bremsventils (3) ist.

10. Druckluft-Bremssystem (1) für ein Nutzfahrzeug (7), das aufweist:
- ein Bremspedal (2),
- ein durch das Bremspedal (2) ansteuerbares Bremsventil (3) nach einem der vorherigen Ansprüche,
- mindestens einen Bremskreis (22) mit mindestens einer Radbremse (14) und einer ABS-Ventileinrichtung (11, 12, 13),
- eine Bremsdruck-Steuerleitung (5) zum Leiten oder Führen des analogen Bremsventil-Ausgangsdruckes (p1) zu dem Bremskreis (22), und
- eine Brems-Steuereinrichtung (8) zur Aufnahme der mindestens zwei Sensornutzsignale (S1a, S1b) und zur Ausgabe von Steuersignalen (S2, S3), wobei Sensornutzsignale (S1a, S1b) über eine elektrische Steuerleitung (9) von dem Bremsventil (3) ausgebbar sind.

11. Fahrzeug (7), insbesondere Nutzfahrzeug (7), mit einem Druckluft-Bremssystem (1) nach Anspruch 10.

12. Verfahren zum Herstellen eines Bremsventils (3) nach einem der Ansprüche 1 bis 9, mit mindestens den folgenden Schritten:
- Anschließen eines Systemdrucks (p0) an einen Druckluft-Eingang (3a) des Bremsventils (3) und eines Drucksensors (52) an einen Druckluft-Ausgang (3b) des Bremsventils (3) (St1a),
- sukzessives Verstellen eines Aktuators (50) (St2a, St2b), wobei der Aktuator (50) auf das Betätigungselement (6) des Bremsventils (3) wirkt, und
- Messen zum einen der mehreren Bremsventil-Stellweg-Werte (BSWi) als Betätigungssignal (S5; S5a, S5b) des Sensors (18; 18a, 18b) und zum anderen Ermitteln der von dem Bremsventil (3) bei den Bremsventil-Stellweg-Werten (BSWi) an dem Druckluft-Ausgang (3b) ausgegebenen Bremsventil-Ausgangsdruck-Werten (p1i) durch den Drucksensor (52) (St3a) sowie von durch den Aktuator (50) vorgegebenen prozentualen Stellpositions-Werten (SPi) des Betätigungselementes (6) (St2b, St3b),
- Bilden einer Bremsventil-Druck-Kennlinie (KLa) und/oder einer Druck-Weg-Abhängigkeit (P1-BSW) aus den Bremsventil-Stellweg-Werten (BSWi) und den Bremsventil-Ausgangsdruck-Werten (p1i) und Abspeichern der Bremsventil-Druck-Kennlinie (KLa) und/oder der Druck-Weg-Abhängigkeit (P1-BSW) in dem Kennlinien-Speicher (21) des Bremsventils (3) (St4a); und
- Bilden einer Bremsventil-Positions-Kennlinie (KLb) und/oder einer Positions-Weg-Abhängigkeit (SP-BSW) aus den Bremsventil-Stellweg-Werten (BSWi) und den prozentualen Stellpositions-Werten (SPi) und Abspeichern der Bremsventil-Positions-Kennlinie (KLb) und/oder der Positions-Weg-Abhängigkeit (SP-BSW) in dem Kennlinien-Speicher (21) des Bremsventils (3).

13. Verfahren nach Anspruch 12, **dadurch gekennzeichnet, dass** die beiden Kennlinien (KLa, KLb) als Fixpunkte (FPi) oder Streckenpunkte (Ei) abgespeichert werden, wobei die Fixpunkte (FPi) oder die Streckenpunkte (Ei) als oder aus Werte-Tupeln der Bremsventil-Stellweg-Werte (BSWi) und der Bremsventil-Ausgangsdruck-Werte (p1i) bzw. aus den prozentualen Stellpositions-Werten (SPi) gebildet sind (St4a, St4b).

## Claims

1. Brake valve (3) for a compressed air brake system (1) of a commercial vehicle (7), wherein the brake valve (3) can be actuated by a brake pedal (2) and is intended to output an analog brake valve output pressure (p1) and useful electrical sensor signals (Sla, S1b), in each case as a function of the actuation of the brake pedal (2),
wherein the brake valve (3) has a compressed air inlet (3a) for connection to a system pressure (p0), a compressed air outlet (3b) for the connection of a brake control line (5), at least one sensor (18; 18a, 18b) for determining a brake valve actuation travel (BSW) of an actuating element (6) of the brake valve (3) that is operatively connected to the brake pedal (2), and a characteristic curve memory device (21) containing at least two stored characteristic curves (KLa, KLb) and/or dependences (P1-BSW, SP-BSW), as well as at least one determination device (20; 20a, 20b), and is intended to output a first useful sensor signal (S1a), which represents the brake valve output pressure (p1), and
- the at least one sensor (18; 18a, 18b) is designed to generate an actuation signal (S5; S5a, S5b) as a function of the brake valve actuation travel (BSW) of the actuating element (6), and
- the at least one determination device (20; 20a, 20b) is designed to generate the first useful sensor signal (S1a) from the at least one actuation signal (S5; S5a, S5b) as a function of the at least two characteristic curves (KLa, KLb) and/or dependences (P1-BSW, SP-BSW) stored in the characteristic curve memory (21), **characterized**
- **in that** the brake valve (3) is further intended to output a second useful sensor signal (S1b), which represents a percentage actuation position (SP) of the actuating element (6),
- **in that** the at least one determination device (20; 20a, 20b) is designed to generate the first useful sensor signal (S1a) from the at least one actuation signal (S5; S5a) as a function of a brake valve pressure characteristic curve (KLa) and/or a pressure-travel dependence (P1-BSW) stored in the characteristic curve memory (21), and to generate the second useful sensor signal (S1b) from the at least one actuation signal (S5; S5b) as a function of a brake valve position characteristic curve (KLb) and/or a position-travel dependence (SP-BSW) stored in the characteristic curve memory (21),
- **in that** the at least one determination device (20; 20a) is designed to associate the first useful sensor signal (S1a) with the at least one actuation signal (S5; S5a) via the stored brake valve pressure characteristic curve (KLa) and/or the pressure-travel dependence (P1-BSW), wherein the first useful sensor signal (S1a) represents the analog-controlled brake valve output pressure (p1),
- and **in that** the stored brake valve pressure characteristic curve (KLa) and/or the pressure-travel dependence (P1-BSW) indicates a non-linear relationship between the brake valve output pressure (p1) and the brake valve actuation travel (BSW), and the stored brake valve position characteristic curve (KLb) and/or the position-travel dependence (SP-BSW) indicates a linear relationship between the percentage actuation position (SP) and the brake valve actuation travel (BSW).

2. Brake valve (3) according to claim 1, **characterized in that** the at least one determination device (20; 20b) is designed to associate the second useful sensor signal (S1b) with the at least one actuation signal (S5; S5b) via the stored brake valve position characteristic curve (KLb) and/or the position-travel dependence (SP-BSW), wherein the second useful sensor signal (S1b) represents the percentage actuation position (SP) of the brake pedal (2).

3. Brake valve (3) according to claim 2, **characterized in that** the at least one determination device (20; 20b) is designed to generate the second useful sensor signal (S1b) as a linear dependence of the percentage actuation position (SP) on the brake valve actuation travel (BSW) and to output said signal.

4. Brake valve (3) according to any one of claims 1 to 3, **characterized in that** the at least one determination device (20; 20a, 20b) is designed to generate the useful sensor signals (Sla, S1b) by proportional variation, in particular linear variation, of a signal width (ta_PWM, tb_PWM) and to output said signals.

5. Brake valve (3) according to claim 1, **characterized in that** the brake valve pressure characteristic curve (KLa) and/or the pressure-travel dependence (P1-BSW) have at least two linear regions (Vb1, Vb2) with different gradients (SL1, SL2), wherein the gradients (SL1, SL2) are associated with the spring stiffnesses of two springs (32a, 32b) of a spring device (32) of the brake valve (3) or brake pedal (2) or reproduce sections of a non-linear spring characteristic curve in a linear manner.

6. Brake valve (3) according to any one of the preceding claims, **characterized in that** the characteristic curves (KLa, KLb) have fixed points (FPi) or path points (Ei) as value pairs for interpolation of the characteristic curves (KLa, KLb).

7. Brake valve (3) according to any one of the preceding claims, **characterized in that** the brake valve (3) has only one sensor (18) and one determination device (20), wherein the sensor (18) is designed to generate an actuation signal (S5) as a function of the brake valve actuation travel (BSW) and to output said signal to the determination device (20), and the just one determination device (20) is designed to generate two different useful sensor signals (S1a, S2b) from the one actuation signal (S5) as a function of the at least two characteristic curves (KLa, KLb) and/or dependences (P1-BSW, SP-BSW) stored in the characteristic curve memory (21) and to output said signals.

8. Brake valve (3) according to any one of claims 1 to 6, **characterized in that** the brake valve (3) has two sensors (18a, 18b) and two determination devices (20a, 20b), wherein a first sensor (18a) is designed to generate a first actuation signal (S5a) as a function of the brake valve actuation travel (BSW) and to output said signal to a first determination device (20a), and a second sensor (18b) is designed to output a second actuation signal (S5b) to a second determination device (20b), wherein
the first determination device (20a) is designed to generate the first useful sensor signal (S1a) from the first actuation signal (S5a) as a function of the characteristic curves (KLa) and/or dependences (P1-BSW) stored in the characteristic curve memory (21), and the second determination device (20b) is designed to generate the second useful sensor signal (S1b) from the second actuation signal (S5b) as a function of the characteristic curves (KLb) and/or dependences (SP-BSW) stored in the characteristic curve memory (21).

9. Brake valve (3) according to any one of the preceding claims, **characterized in that** the at least one sensor (18; 18a, 18b) is a travel sensor, in particular a Hall sensor (18; 18a, 18b), for determining the brake valve actuation travel (BSW) of the actuating element (6) operatively connected to the brake pedal (2), in order to adjust a passage cross-section (33) of the brake valve (3).

10. Compressed air brake system (1) for a commercial vehicle (7), comprising:
- a brake pedal (2),
- a brake valve (3) according to any one of the preceding claims, which can be actuated by the brake pedal (2),
- at least one brake circuit (22) comprising at least one wheel brake (14) and one ABS valve device (11, 12, 13),
- a brake pressure control line (5) for conducting or guiding the analog brake valve output pressure (p1) to the brake circuit (22), and
- a brake control device (8) for receiving the at least two useful sensor signals (S1a, S1b) and for outputting control signals (S2, S3), wherein useful sensor signals (Sla, S1b) can be output from the brake valve (3) via an electrical control line (9).

11. Vehicle (7), in particular a commercial vehicle (7), having a compressed air brake system (1) according to claim 10.

12. Method for producing a brake valve (3) according to any one of claims 1 to 9, comprising at least the following steps:
- connecting a system pressure (p0) to a compressed air inlet (3a) of the brake valve (3) and connecting a pressure sensor (52) to a compressed air outlet (3b) of the brake valve (3) (St1a),
- successively moving an actuator (50) (St2a, St2b), wherein the actuator (50) acts on the actuating element (6) of the brake valve (3), and
- on the one hand measuring the plurality of brake valve actuation travel values (BSWi) as the actuation signal (S5; S5a, S5b) of the sensor (18; 18a, 18b), and on the other hand determining, by means of the pressure sensor (52), the brake valve output pressure values (p1i) output by the brake valve (3) at the compressed air outlet (3b) in the case of the brake valve actuation travel values (BSWi) (St3a), as well as percentage actuation position values (SPi) of the actuating element (6) that are predefined by the actuator (50) (St2b, St3b),
- forming a brake valve pressure characteristic curve (KLa) and/or a pressure-travel dependence (P1-BSW) from the brake valve actuation travel values (BSWi) and the brake valve output pressure values (pli), and storing the brake valve pressure characteristic curve (KLa) and/or the pressure-travel dependence (P1-BSW) in the characteristic curve memory (21) of the brake valve (3) (St4a), and
- forming a brake valve position characteristic curve (KLb) and/or a position-travel dependence (SP-BSW) from the brake valve actuation travel values (BSWi) and the percentage actuation position values (SPi), and storing the brake valve position characteristic curve (KLb) and/or the position-travel dependence (SP-BSW) in the characteristic curve memory (21) of the brake valve (3).

13. Method according to claim 12, **characterized in that** the two characteristic curves (KLa, KLb) are stored as fixed points (FPi) or path points (Ei), wherein the fixed points (FPi) or the path points (Ei) are formed as or from values tuples of the brake valve actuation travel values (BSWi) and the brake valve output pressure values (p1i) and/or from the percentage actuation position values (SPi) (St4a, St4b).

## Revendications

1. Soupape de freinage (3) pour un système de freinage à air comprimé (1) d'un véhicule utilitaire (7), dans laquelle la soupape de freinage (3) peut être commandée par une pédale de frein (2) et est prévue pour la délivrance d'une pression de sortie de soupape de freinage (p1) analogique ainsi que de signaux utiles de capteur (Sla, S1b) électriques respectivement en fonction de l'actionnement de la pédale de frein (2),
dans laquelle la soupape de freinage (3) présente une entrée d'air comprimé (3a) à raccorder à une pression système (p0), une sortie d'air comprimé (3b) pour le raccordement d'une ligne de commande de freinage (5), au moins un capteur (18 ; 18a, 18b) pour la détermination d'une course de réglage de soupape de freinage (BSW) d'un élément d'actionnement (6) de la soupape de freinage (3) en liaison fonctionnelle avec la pédale de frein (2) et un dispositif mémoire de courbes caractéristiques (21) avec au moins deux courbes caractéristiques (KLa, KLb) et/ou dépendances (P1-BSW, SP-BSW) mises en mémoire ainsi qu'au moins un dispositif de détermination (20 ; 20a, 20b) et est prévue pour la délivrance d'un premier signal utile de capteur (S1a), qui représente la pression de sortie de soupape de freinage (p1), et
- le au moins un capteur (18 ; 18a, 18b) est réalisé pour produire un signal d'actionnement (S5 ; S5a, S5b) en fonction de la course de réglage de soupape de freinage (BSW) de l'élément d'actionnement (6), et
- le au moins un dispositif de détermination (20 ; 20a, 20b) est réalisé pour produire le premier signal utile de capteur (S1a) à partir du au moins un signal d'actionnement (S5 ; S5a, S5b) en fonction des au moins deux courbes caractéristiques (KLa, KLb) et/ou dépendances (P1-BSW, SP-BSW) mises en mémoire dans la mémoire de courbes caractéristiques (21), **caractérisée en ce**
- **que** la soupape de freinage (3) est prévue en outre pour la délivrance d'un deuxième signal utile de capteur (S1b), qui représente une position de réglage en pourcentage (SP) de l'élément d'actionnement (6),
- **que** le au moins un dispositif de détermination (20 ; 20a, 20b) est réalisé pour produire le premier signal utile de capteur (S1a) à partir du au moins un signal d'actionnement (S5 ; S5a) en fonction d'une courbe caractéristique de pression de soupape de freinage (KLa) mise en mémoire et/ou d'une dépendance pression-course (P1-BSW) dans la mémoire de courbes caractéristiques (21) et pour produire le deuxième signal utile de capteur (S1b) à partir du au moins un signal d'actionnement (S5 ; S5b) en fonction d'une courbe caractéristique de position de soupape de freinage (KLb) et/ou d'une dépendance position-course (SP-BSW) mise en mémoire dans la mémoire de courbes caractéristiques (21),
- **que** le au moins un dispositif de détermination (20 ; 20a) est réalisé pour associer le premier signal utile de capteur (S1a) à le au moins un signal d'actionnement (S5 ; S5a) par l'intermédiaire de la courbe caractéristique de pression de soupape de freinage (KLa) ou de la dépendance pression-course (P1-BSW) mise en mémoire, dans laquelle le premier signal utile de capteur (S1a) représente la pression de sortie de soupape de freinage (p1) modulée de manière analogique,
- et **que** la courbe caractéristique de pression de soupape de freinage (KLa) mise en mémoire et/ou la dépendance pression-course (P1-BSW) indique une relation non linéaire entre la pression de sortie de soupape de freinage (p1) et la course de réglage de soupape de freinage (BSW), et la courbe caractéristique de position de soupape de freinage (KLb) mise en mémoire et/ou la dépendance position-course (SP-BSW) indique une relation linéaire entre la position de réglage en pourcentage (SP) et la course de réglage de soupape de freinage (BSW).

2. Soupape de freinage (3) selon la revendication 1, **caractérisée en ce que** le au moins un dispositif de détermination (20 ; 20b) est réalisé pour associer le deuxième signal utile de capteur (S1b) à le au moins un signal d'actionnement (S5 ; S5b) par l'intermédiaire de la courbe caractéristique de position de soupape de freinage (KLb) mise en mémoire ou de la dépendance position-course (SP-BSW), dans laquelle le deuxième signal utile de capteur (S1b) représente la position de réglage en pourcentage (SP) de la pédale de frein (2).

3. Soupape de freinage (3) selon la revendication 2, **caractérisée en ce que** le au moins un dispositif de détermination (20 ; 20b) est réalisé pour produire et pour délivrer le deuxième signal utile de capteur (S1b) en tant que dépendance linéaire de la position de réglage (SP) en pourcentage par rapport à la course de réglage de soupape de freinage (BSW).

4. Soupape de freinage (3) selon l'une quelconque des revendications 1 à 3, **caractérisée en ce que** le au moins un dispositif de détermination (20 ; 20a, 20b) est réalisé pour produire et pour délivrer les signaux utiles de capteur (Sla, S1b) au moyen d'une variation proportionnelle, en particulier variation linéaire, d'une largeur de signal (ta_PWM, tb_PWM).

5. Soupape de freinage (3) selon la revendication 1, **caractérisée en ce que** la courbe caractéristique de pression de soupape de freinage (KLa) ou la dépendance pression-course (P1-BSW) présente au moins deux zones linéaires (Vb1, Vb2) avec différentes pentes (SL1, SL2), dans laquelle les pentes (SL1, SL2) sont associées aux rigidités de ressort de deux ressorts (32a, 32b) d'un dispositif à ressort (32) de la soupape de freinage (3) ou de la pédale de frein (2) ou reproduisent linéairement sur certaines parties une courbe caractéristique de ressort non linéaire.

6. Soupape de freinage (3) selon l'une quelconque des revendications précédentes, **caractérisée en ce que** les courbes caractéristiques (KLa, KLb) présentent des points fixes (FPi) ou points de parcours (Ei) en tant que paires de valeurs pour l'interpolation des courbes caractéristiques (KLa, KLb).

7. Soupape de freinage (3) selon l'une quelconque des revendications précédentes, **caractérisée en ce que** la soupape de freinage (3) présente seulement un capteur (18) et un dispositif de détermination (20), dans laquelle le capteur (18) est réalisé pour produire un signal d'actionnement (S5) en fonction de la course de réglage de soupape de freinage (BSW) et pour le délivrer au dispositif de détermination (20) et le seulement un dispositif de détermination (20) est réalisé pour produire et pour délivrer deux signaux utiles de capteur (Sla, S1b) différents à partir du un signal d'actionnement (S5) en fonction des au moins deux courbes caractéristiques (KLa, KLb) et/ou dépendances (P1-BSW, SP-BSW) mises en mémoire dans la mémoire de courbes caractéristiques (21).

8. Soupape de freinage (3) selon l'une quelconque des revendications 1 à 6, **caractérisée en ce que** la soupape de freinage (3) présente deux capteurs (18a, 18b) et deux dispositifs de détermination (20a, 20b), dans laquelle un premier capteur (18a) est réalisé pour produire un premier signal d'actionnement (S5a) en fonction de la course de réglage de soupape de freinage (BSW) et pour le délivrer à un premier dispositif de détermination (20a) et un deuxième capteur (18b) est réalisé pour délivrer un deuxième signal d'actionnement (S5B) à un deuxième dispositif de détermination (20b), dans laquelle
le premier dispositif de détermination (20a) est réalisé pour produire à partir du premier signal d'actionnement (S5a) en fonction des courbes caractéristiques (KLa) et/ou dépendances (P1-BSW) mises en mémoire dans la mémoire de courbes caractéristiques (21) le premier signal utile de capteur (S1a) et le deuxième dispositif de détermination (20b) est réalisé pour produire à partir du deuxième signal d'actionnement (S5B) en fonction des courbes caractéristiques (KLb) et/ou dépendances (SP-BSW) mises en mémoire dans la mémoire de courbes caractéristiques (21) le deuxième signal utile de capteur (S1b).

9. Soupape de freinage (3) selon l'une quelconque des revendications précédentes, **caractérisée en ce que** le au moins un capteur (18 ; 18a, 18b) est un capteur de course, en particulier un capteur à effet Hall (18 ; 18a, 18b) pour la détermination de la course de réglage de soupape de freinage (BSW) de l'élément d'actionnement (6) en liaison fonctionnelle avec la pédale de frein (2) pour le réglage d'une section transversale de passage (33) de la soupape de freinage (3).

10. Système de freinage à air comprimé (1) pour un véhicule utilitaire (7), qui présente :
- une pédale de frein (2),
- une soupape de freinage (3) pouvant être commandée par la pédale de frein (2) selon l'une quelconque des revendications précédentes,
- au moins un circuit de freinage (22) avec au moins un frein de roue (14) et un dispositif de soupape ABS (11, 12, 13),
- une ligne de commande de pression de freinage (5) pour acheminer ou guider la pression de sortie de soupape de freinage (p1) analogique vers le circuit de freinage (22), et
- un dispositif de commande de freinage (8) pour recevoir les au moins deux signaux utiles de capteur (S1a, S1b) et pour délivrer des signaux de commande (S2, S3),
dans lequel des signaux utiles de capteur (S1a, S1b) peuvent être délivrés par la soupape de freinage (3) par l'intermédiaire d'une ligne de commande électrique (9).

11. Véhicule (7), en particulier véhicule utilitaire (7), avec un système de freinage à air comprimé (1) selon la revendication 10.

12. Procédé pour fabriquer une soupape de freinage (3) selon l'une quelconque des revendications 1 à 9, avec au moins les étapes suivantes :
- le raccordement d'une pression système (p0) à une entrée d'air comprimé (3a) de la soupape de freinage (3) et d'un capteur de pression (52) à une sortie d'air comprimé (3b) de la soupape de freinage (3) (St1a),
- le réglage successif d'un actionneur (50) (St2a, St2b), dans lequel l'actionneur (50) agit sur l'élément d'actionnement (6) de la soupape de freinage (3), et
- la mesure d'une part des plusieurs valeurs de course de réglage de soupape de freinage (BSWi) en tant que signal d'actionnement (S5 ; S5a, S5b) du capteur (18 ; 18a, 18b) et d'autre part la détermination des valeurs de pression de sortie de soupape de freinage (pli) délivrées à la sortie d'air comprimé (3b) par la soupape de freinage (3) pour les valeurs de course de réglage de soupape de freinage (BSWi) par le capteur de pression (52) (St3a) ainsi que de valeurs de position de réglage (SPi) en pourcentage de l'élément d'actionnement (6) prédéfinies par l'actionneur (50) (St2b, St3b),
- la formation d'une courbe caractéristique de pression de soupape de freinage (KLa) et/ou d'une dépendance pression-course (P1-BSW) à partir des valeurs de course de réglage de soupape de freinage (BSWi) et des valeurs de pression de sortie de soupape de freinage (pli) et la mise en mémoire de la courbe caractéristique de pression de soupape de freinage (KLa) et/ou de la dépendance pression-course (P1-BSW) dans la mémoire de courbes caractéristiques (21) de la soupape de freinage (3) (St4a) ; et
- la formation d'une courbe caractéristique de position de soupape de freinage (KLb) et/ou d'une dépendance position-course (SP-BSW) à partir des valeurs de course de réglage de soupape de freinage (BSWi) et des valeurs de position de réglage en pourcentage (SPi) et la mise en mémoire de la courbe caractéristique de position de soupape de freinage (KLb) et/ou de la dépendance position-course (SP-BSW) dans la mémoire de courbes caractéristiques (21) de la soupape de freinage (3).

13. Procédé selon la revendication 12, **caractérisé en ce que** les deux courbes caractéristiques (KLa, KLb) sont mises en mémoire en tant que points fixes (FPi) ou points de parcours (Ei), dans lequel les points fixes (FPi) ou les points de parcours (Ei) sont formés en tant que tuples de valeurs des valeurs de course de réglage de soupape de freinage (BSWi) et des valeurs de pression de sortie de soupape de freinage (pli) ou à partir des valeurs de position de réglage en pourcentage (SPi) (St4a, St4b).
